# EUROPÄISCHE PATENTSCHRIFT

(11) **EP 0 726 581 B1**
(45) Veröffentlichungstag und Bekanntmachung des Hinweises auf die Patenterteilung: **03.04.2002**
(21) Anmeldenummer: 96810046.1
(22) Anmeldetag: 23.01.1996
(51) Int. Cl.: H01B 19/04, H01B 19/00, H01C 7/12

(54) **Verfahren zur Herstellung eines Isolators**
Method of making an insulator
Procédé de fabrication d'un isolateur

(30) Priorität: 11.02.1995 DE 19504532
(43) Veröffentlichungstag der Anmeldung: 14.08.1996
(73) Patentinhaber: ABB Hochspannungstechnik AG, 8050 Zürich (CH)
(72) Erfinder: Jülke, Elias, Dr., CH-5430 Wettingen (CH); Schmidt, Walter, CH-5454 Bellikon (CH)
(74) Vertreter: ABB Patent Attorneys

(56) Entgegenhaltungen:
- EP-A- 0 001 231
- EP-A- 0 545 038
- INDUSTRIAL RESEARCH/DEVELOPMENT, JUNE 1982, USA, Bd. 24, Nr. 6, ISSN 0160-4074, Seiten 131-132, 134, XP002022972 KERN W: "Fluorescent tracers simplify detection of microdefects"
- RCA REVIEW, JUNE 1982, USA, Bd. 43, Nr. 2, ISSN 0033-6831, Seiten 310-338, XP002022973 KERN W ET AL: "Fluorescent tracers-powerful tools for studying corrosion phenomena and defects in dielectrics"

## Beschreibung

Die Erfindung geht aus von einem Verfahren zur Herstellung eines Isolators gemäss Patentanspruch 1 und von einem Isolator gemäss Patentanspruch 7.

### STAND DER TECHNIK

Aus der EP-A1-0 545 038 ist ein Überspannungsableiter bekannt, der in ein elektrisch isolierendes Material eingegossen ist. Dieser Überspannungsableiter weist zwei durch axial leicht federnde Kunststoffleisten gegeneinander verspannte Armaturen auf. Die Kunststoffleisten werden in den Armaturen formschlüssig geführt. Der Überspannungsableiter weist zylinderförmig ausgebildete, zu einem Stapel geschichtete Varistorelemente auf. Zwischen dem Stapel und der jeweiligen Anschlussarmatur ist eine Distanzplatte vorgesehen, die mittels eines in die Armatur eingeschraubten Gewindebolzen gegen den Stapel gedrückt wird. Die Armaturen begrenzen den Stapel von Varistorelementen. Zwischen den einzelnen Varistorelementen und zwischen den Varistorelementen und den elektrisch leitenden Distanzplatten sind Rillenscheiben zur Verbesserung der Kontaktgabe vorgesehen. Das oben beschriebene Bauteil wird mit Isoliermaterial umgossen.

Es muss darauf geachtet werden, dass die Oberfläche des Bauteils, die mit dem Isoliermaterial in Berührung kommt, nicht mit Fett oder sonstigen Stoffen verunreinigt ist, welche die Haftung des Isoliermaterials verschlechtern könnten. Bei einer schlechten Haftung bestünde die Gefahr der Ausbildung eines unerwünschten Kriechwegs entlang der Oberfläche der Varistorelemente. Die Haftung wird häufig mit Hilfe einer Primerschicht, die auf die Varistorelemente aufgetragen wird, verbessert. Herkömmliche Primer sind farblos, sodass es auf einfache Weise nicht möglich ist, die aufgetragene Menge und die gleichmässige Verteilung desselben zu kontrollieren, insbesondere sind auch Stellen, die keinen Primerauftrag erhalten haben, nicht einfach zu erkennen. An diesen Stellen kann Feuchtigkeit eindiffundieren, was früher oder später zu elektrischen Längsdurchschlägen in der Grenzschicht zwischen den Varistorelementen und dem Isoliermaterial führt.

Aus der Schrift EP 0 001 231 A1 ist ein Verfahren zur Herstellung von Isolatoren bekannt, bei dem der Einsatz von Haftvermittlern für eine bessere Haftung zwischen isolierenden Bauteilen und dem auf sie aufzubringenden Isoliermaterial beschrieben wird.

Aus der Schrift US 4,125,507 ist der Einsatz eines Haftvermittlers bekannt, der mit einem nicht lichtbeständigen Farbstoff versetzt ist. Das mit dem Haftvermittler beschichtete Bauteil darf nur solange weiter verarbeitet werden als der Farbstoff noch deutlich sichtbar ist. Wird mit der Weiterverarbeitung zu lange zugewartet, so verliert der Haftvermittler zusammen mit der Farbe auch seine guten Eigenschaften und eine zufriedenstellende Haftung ist nicht mehr gewährleistet.

Aus der Auslegeschrift DE 1 198 431 ist der Einsatz einer fluoreszierenden Flüssigkeit bekannt, die als Füll- und Tränkmittel bei Kondensatoren verwendet wird und die zugleich den Nachweis von undichten Stellen im Kondensatorgehäuse erleichtert.

### DARSTELLUNG DER ERFINDUNG

Die Erfindung, wie sie in den unabhängigen Ansprüchen gekennzeichnet ist, löst die Aufgabe, ein Verfahren zur Herstellung eines Isolators mit auf einer Primerschicht aufgebrachtem elektrisch isolierendem Material anzugeben, bei dem die Geschlossenheit der aufgetragenen Primerschicht auf vergleichsweise einfache Art kontrolliert werden kann. Zudem wird ein nach diesem Verfahren hergestellter Isolator angegeben.

Das Kontrollieren der Geschlossenheit der aufgetragenen Primerschicht erfolgt auf optischem Weg und ist zerstörungsfrei. Reparaturen von fehlerhaften Stellen in der Primerschicht sind einfach möglich. Das Kontrollverfahren ist sowohl für grosse als auch für vergleichsweise kleine Fertigungsstückzahlen wirtschaftlich anwendbar. Isolatoren, die mit einer geschlossenen Primerschicht versehen sind, weisen eine grössere Betriebssicherheit auf, sodass mit derartigen Isolatoren ausgerüstete Verteilnetze eine deutlich geringere Anzahl von auf Isolatorstörungen zurückführbare Netzausfälle aufweisen. Insbesondere wird auch die Betriebssicherheit von Überspannungsableitern erhöht, wenn deren Aktivteile mit einer geschlossenen, einfach kontrollierbaren Primerschicht versehen werden, ehe sie in ein Isoliermaterial eingegossen werden.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 einen Längsschnitt durch einen in Isoliermaterial eingegossenen Überspannungsableiter,
Fig.2 einen Teilschnitt durch einen Stützisolator, und
Fig.3 ein Blockdiagramm einer Ausführungsform des erfindungsgemässen Verfahrens zur Herstellung des Überspannungsableiters nach Fig.1.

### WEGE ZUR AUSFÜHRUNG DER ERFINDUNG

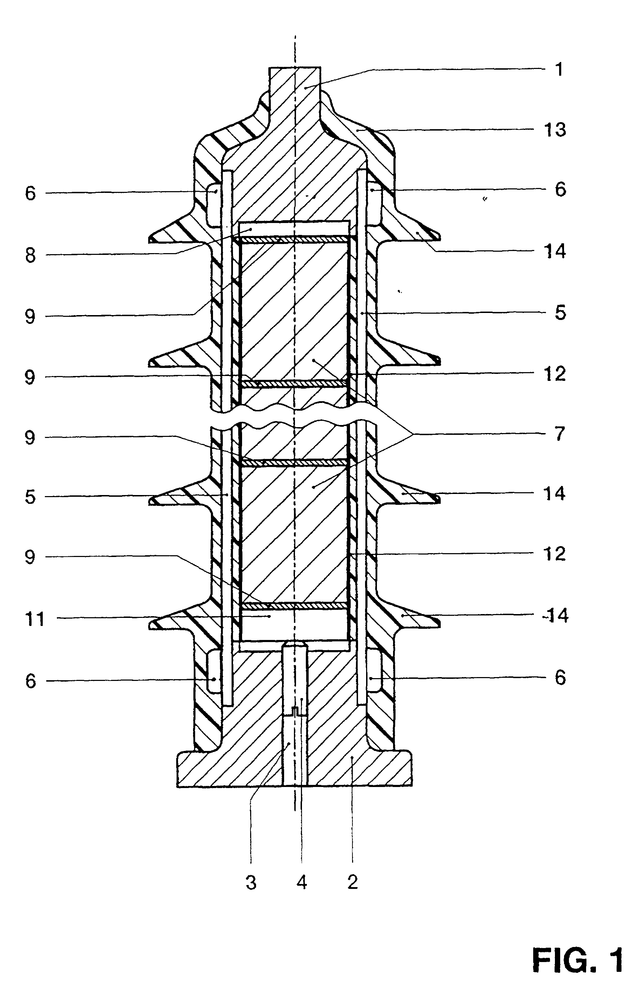

Die Fig.1 zeigt in schematischer Darstellung einen Längsschnitt durch einen mit einer Aussenisolierung versehenen Überspannungsableiter. Der Überspannungsableiter weist zwei Anschlussarmaturen 1,2 aus Metall auf. Die Anschlussarmatur 1 ist, ebenso wie die Anschlussarmatur 2, mit einer nicht dargestellten Befestigungsmöglichkeit für einen elektrischen Leiter versehen. In der Anschlussarmatur 2 ist im Zentrum eine Gewindebohrung 3 vorgesehen, in welcher eine Druckschraube 4 angeordnet ist. Die beiden Anschlussarmaturen 1,2 sind durch zwei starre, jedoch in axialer Richtung etwas dehnbare, glasfaserverstärkte Kunststoffleisten 5 miteinander verbunden. Diese Kunststoffleisten 5 sind mittels Schrauben 6 an den Anschlussarmaturen 1,2 befestigt. Die Kunststoffleisten 5 weisen beispielsweise einen rechteckigen Querschnitt auf und sind symmetrisch zur Längsachse des Überspannungsableiters angeordnet. Die rechteckigen Kunststoffleisten 5 sind formschlüssig in die Oberfläche der jeweiligen Anschlussarmatur 1 oder 2 eingebettet.

Der durch die Anschlussarmaturen 1,2 und die Kunststoffleisten 5 gebildete Rahmen umschliesst zylinderförmig ausgebildete, zu einem Stapel geschichtete Varistorelemente 7. Als Varistormaterial, kann beispielsweise ZnO eingesetzt werden. In eine Aussparung der Anschlussarmatur 1 ist eine passende Platte 8 aus Metall eingelegt. Zwischen der Platte 8 und dem nächsten Varistorelement 7 ist eine zylindrisch ausgebildete Rillenscheibe 9 eingelegt, die eine zentrale Bohrung 10 aufweist, ebenso zwischen benachbarten Varistorelementen 7. Nach dem untersten Varistorelement 7 ist ebenfalls eine Rillenscheibe 9 vorgesehen, die auf einer Druckplatte 11 aufliegt. Die Druckschraube 4 wirkt auf die Druckplatte 11 ein und führt den beim Ansprechen des Überspannungsableiters fliessenden Strom von der Druckplatte 11 zur Anschlussarmatur 2. Beim Einbringen der beschriebenen Aktivteile in den Rahmen ist darauf zu achten, dass keine Spalten zwischen den einzelnen Teilen des zylinderförmig ausgebildeten Stapels offenbleiben, in welche beim Umgiessen Isolierstoff eindringen könnte. Die eigentliche Kontaktkraft zwischen den Aktivteilen und den Anschlussarmaturen 1,2 wird durch die Druckschraube 4 erzeugt, die mit einem vorgegebenen Drehmoment angezogen und anschliessend auf eine der bekannten Arten gesichert wird. Auf diese Art ist ein vormontiertes Bauteil entstanden.

Dieses vormontierte Bauteil wird nun mit Hilfe eines Lösungsmittels vollständig von eventuell angelagerten Fett- und Salzresten gereinigt. Als Lösungsmittel werden beispielsweise Aceton oder Isopropanol eingesetzt. Nach dem Reinigen des Bauteils folgt ein Trocknungsvorgang. Das vormontierte Bauteil wird danach mit einer Primerlösung überzogen, und zwar werden alle Bereiche, insbesondere auch die Kunststoffleisten 5, die beim anschliessenden Umgiessen mit dem Isoliermaterial bedeckt werden, mit einer vergleichsweise dünnen, nur wenige µm dicken, zusammenhängenden Primerschicht versehen. Als Schichtdicke der trockenen Primerschicht werden in der Regel etwa 0,5µm bis 5µm angestrebt. In der Fig.1 ist, der besseren Anschaulichkeit halber wesentlich dicker als dies dem Massstab der Zeichnung entsprechen würde, nur die Primerschicht 12 dargestellt, welche die zylinderförmig ausgebildeten Varistorelemente 7, die Rillenscheiben 9 und die Druckplatte 11 aussen abdeckt.

Das so mit der Primerschicht 12 versehene Bauteil wird in eine Form eingelegt und spalt- und lunkerfrei mit einem Mantel 13 aus elektrisch isolierendem Kunststoff umgossen. Als geeignete Kunststoffe bieten sich hier beispielsweise Silikonelastomere an. Beim Umgiessen werden gleichzeitig isolierende Schirme 14 an den Mantel 13 angeformt. Das gesamte Bauteil wird mit dem Mantel 13 umgeben, lediglich die Teile der Anschlussarmaturen 1,2, die für elektrische Anschlüsse benötigt werden, bleiben metallisch blank.

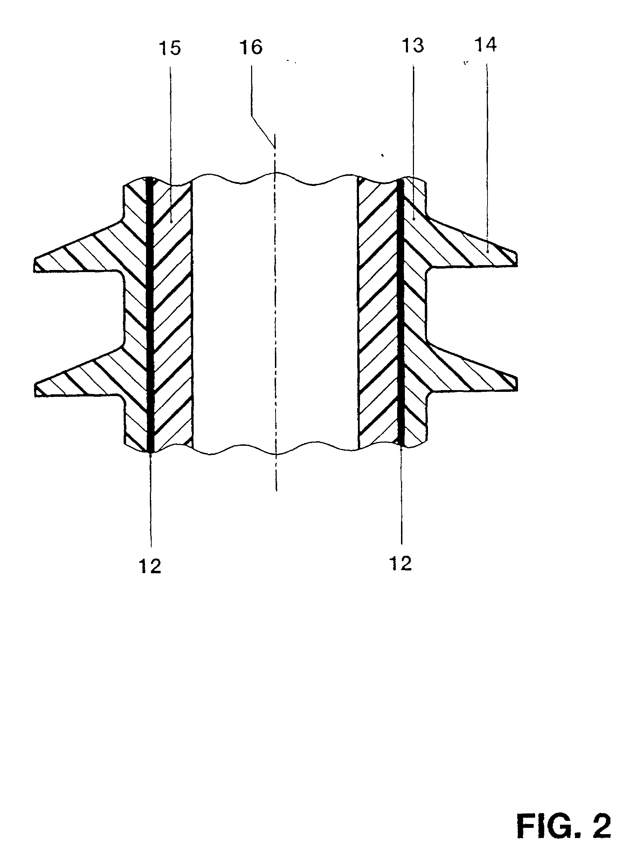

Die Fig.2 zeigt einen vereinfachten Teilschnitt durch einen hohlen Stützisolator. Dieser Isolator könnte jedoch beispielsweise auch als Verkleidung einer Löschkammer oder einer Trennkammer eines Freiluftschalters dienen. Es sind auch Isolatoren möglich, die im Innern keinen Hohlraum aufweisen. Bei diesem Stützisolator ist ein zylindrisch ausgebildetes, faserverstärktes Isolierrohr 15, welches eine Achse 16 aufweist, das eigentliche tragende Element, welches an den Enden jeweils mit nicht dargestellten Anschlussflanschen verbunden ist, die für die mechanische Verbindung des Stützisolators mit benachbarten Baugruppen vorgesehen sind. Das Isolierrohr 15 wird, nach einem Reinigungsvorgang mit Aceton oder Isopropanol, auf der Aussenseite mit einer Primerschicht 12 versehen, die der besseren Anschaulichkeit halber sehr dick dargestellt ist. Diese Primerschicht 12 ist jedoch auch hier lediglich einige µm dick. Als Schichtdicke der trockenen Primerschicht 12 werden in der Regel etwa 0,5µm bis 5µm angestrebt. Das mit der Primerschicht 12 versehene Isolierrohr 15 wird aussen bis zu den Anschlussflanschen mit einem Mantel 13 aus Isoliermaterial umgossen, wobei an diesen Mantel 13 gleichzeitig Schirme 14 angeformt werden.

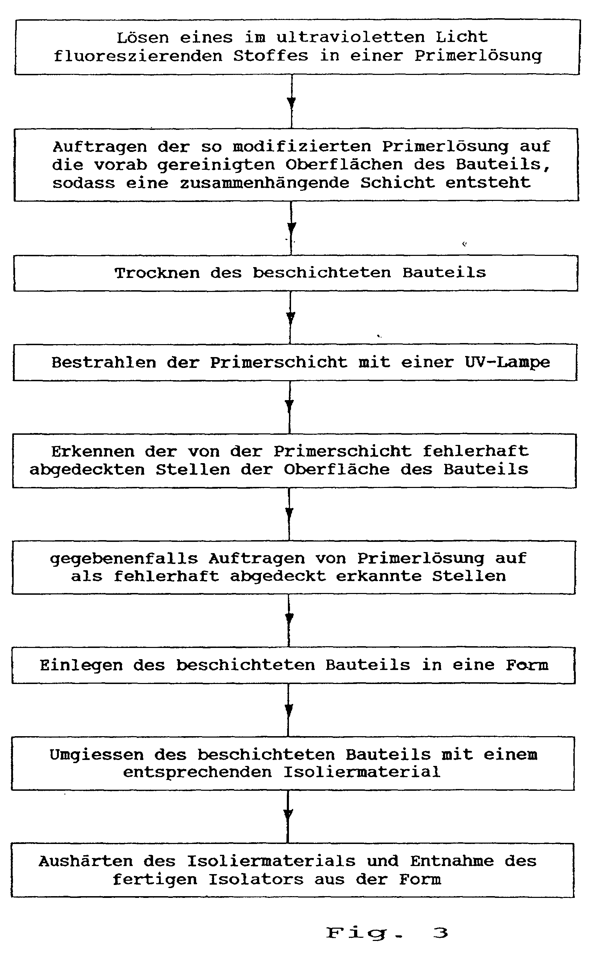

In der Fig.3 ist das Verfahren zur Herstellung eines Isolators mit mindestens einem eingegossenen Bauteil als Blockdiagramm dargestellt. Dieses Verfahren weist die folgenden Verfahrensschritte auf:
a) Lösen eines im ultravioletten Licht fluoreszierenden Stoffes in der Primerlösung;
b) Auftragen der so modifizierten Primerlösung auf die vorab gereinigten Oberflächen des Bauteils, sodass eine zusammenhängende Schicht entsteht;
c) Trocknen des beschichteten Bauteils;
d) Bestrahlen der Primerschicht 12 mit einer UV-Lampe;
e) Erkennen der von der Primerschicht 12 fehlerhaft abgedeckten Stellen der Oberfläche des Bauteils;
e) gegebenenfalls Auftragen von Primerlösung auf als fehlerhaft abgedeckt erkannte Stellen;
f) Einlegen des beschichteten Bauteils in eine Form;
g) Umgiessen des beschichteten Bauteils mit einem entsprechenden Isoliermaterial;
h) Aushärten des Isoliermaterials und Entnahme des fertigen Isolators aus der Form.

Bei den beiden beschriebenen Ausführungsformen wurde eine Primerlösung der Firma Wacker Chemie GmbH, Postfach 1260, D 84480 Burghausen, Typ "Grund G 790" eingesetzt. Diese Primerlösung enthält eine Organosiliziumverbindung, die in einem aliphatischen Lackbenzin (Solventnaphtha) gelöst ist. Die Primerlösung enthält als Lösungsmittel 50% aliphatische Kohlenwasserstoffe und zudem 2% Kieselsäureester. Als ultraviolettes Licht reflektierender Stoff wurde dieser Primerlösung ein Farbstoff der Firma Ciba-Geigy, CH 4002 Basel, Typ® "Uvitex-OB" beigemischt. Dieser Farbstoff wird im Normalfall in der Papierindustrie und auch in Waschmitteln als optischer Aufheller eingesetzt. Der Primerlösung wurden 0,5 Gewichtsprozent dieses Farbstoffes beigemischt. Wenn etwas mehr Farbstoff beigemischt wird, so setzt sich der nicht gelöste Farbstoffanteil am Boden des Gebindes ab, die Verarbeitbarkeit der Primerlösung wird dadurch nicht negativ beeinflusst. Der Farbstoff ist ebenfalls in dem für die Primerlösung verwendeten Lackbenzin löslich, aber nur in einer vergleichsweise geringen Konzentration. Die Beimengung von 0,5 Gewichtsprozent des Farbstoffs führt bereits zu einer mit ®"Uvitex-OB" gesättigten Lösung.

Nach dem Lösen des Farbstoffs in der Primerlösung wird diese Lösung mit einem der üblichen Verfahren, abhängig von den Abmessungen des Bauteils und von der Anzahl der zu fertigenden Isolatoren, auf das Bauteil aufgetragen. Für das Auftragen könnte beispielsweise ein Tauchverfahren oder ein Spritzverfahren angewendet werden, bei kleinen Stückzahlen ist auch ein einfaches Auftragen mit einem Pinsel vorstellbar. Nach dem Auftragen erfolgt ein als Ablüften bezeichneter erster Trocknungsvorgang, bei dem das primerbeschichtete Bauteil beispielsweise während 30 Minuten bei Umgebungstemperatur gelagert wird, sodass der grösste Teil des Lösungsmittels verdampfen kann. Nach diesem ersten folgt ein zweiter Trocknungsvorgang bei dem das primerbeschichtete Bauteil beispielsweise bei Temperaturen um 100°C während einer Stunde nachgetrocknet wird. Bei dem mit dem Trocknen verbundenen Verdunsten des als Lösungsmittel verwendeten Lackbenzins tritt eine Übersättigung der Lösung und damit verbunden ein Ausfällen von ®"Uvitex-OB"-Partikeln auf. Diese Partikel weisen nach dem Ausfällen ihre volle Fluoreszenzleuchtkraft auf.

Nach diesem Trocknen der aufgetragenen Primerschicht 12 wird die Geschlossenheit dieser Schicht im Dunkeln mit Hilfe einer UV-Lampe kontrolliert. Der hier eingesetzte Farbstoff ®"Uvitex-OB" weist ein besonders kräftiges Fluoreszenzleuchten auf, wenn er mit langwelligem UV-Licht der Wellenlänge 340nm angestrahlt wird. Dort wo kein Fluoreszenzleuchten festgestellt werden kann, weist die Oberfläche des Bauteils nicht mit dem Primer beschichtete Stellen auf, die gezielt mit einem erneuten Auftragen der Primerlösung in diesem Bereich geschlossen werden, sodass sich nach dem anschliessenden Trocknen eine zusammenhängende, dichte Primerschicht 12 ergibt. Dort, wo ein im Vergleich zur übrigen Oberfläche des Bauteils besonders intensives Fluoreszenzleuchten feststellbar ist, liegt eine etwas zu dicke Primerschicht 12 vor. Ein zu dickes Auftragen des Primers reduziert etwas die Haftung des Isoliermaterials auf dem Bauteil, es sollte deshalb vermieden werden.

Es wurden auch Versuche mit einer durch die Zugabe des obigen Farbstoffs modifizierten Primerlösung der Firma Bayer AG, Olof-Palme-Strasse 15, D 51371 Leverkusen, mit der Handelsbezeichnung Silopren-Haftmittel Z 3042 durchgeführt, die ebenfalls sehr gute Resultate erbrachten.

Für das Umgiessen bzw. für das Umpressen des Bauteils sind die Silikonelastomere der Firma Bayer AG, Olof-Palme-Strasse 15, D 51371 Leverkusen, mit den Handelsnamen Silopren LSR 2530 oder Silopren LSR 2250 besonders gut geeignet. Die Silikonelastomere der Firma RADO Gummi GmbH, Postfach 1480, D 42463 Radevormwald, mit den Handelsnamen Silopren LB SI 419 AI oder Silopren LB SI 419 AII sind hier ebenfalls vorteilhaft einsetzbar. Ferner können auch die Silikonelastomere der Firma Wacker Chemie GmbH, Postfach 1260, D 84480 Burghausen, mit den Handelsnamen Powersil 660 oder Powersil 661 oder Powersil 310 oder Powersil 311 für diesen Zweck verwendet werden.

### BEZEICHNUNGSLISTE

- 1,2: Anschlussarmatur
- 3: Gewindebohrung
- 4: Druckschraube
- 5: Kunststoffleisten
- 6: Schrauben
- 7: Varistorelemente
- 8: Platte
- 9: Rillenscheibe
- 10: Bohrung
- 11: Druckplatte
- 12: Primerschicht
- 13: Mantel
- 14: Schirm
- 15: Isolierrohr
- 16: Achse

## Patentansprüche

1. Verfahren zur Herstellung eines Isolators mit mindestens einem mit elektrisch isolierendem Material beschichteten Bauteil, bei dem auf das mindestens eine Bauteil eine Primerlösung aufgetragen wird, bei dem die aufgetragene Primerlösung unter Bildung einer Primerschicht (12) getrocknet wird, worauf auf die Primerschicht (12) das elektrisch isolierende Material aufgebracht wird, **gekennzeichnet dadurch, dass** vor dem Aufbringen des elektrisch isolierenden Materials die folgenden Verfahrensschritte durchgeführt werden:
a) Lösen eines im ultravioletten Licht fluoreszierenden Stoffes in der Primerlösung, wobei der im ultravioletten Licht fluoreszierende Stoff in einer solchen Menge in der Primerlösung gelöst wird, dass sie mit diesem Stoff gesättigt ist,
b) Ausfällung des im ultravioletten Licht fluoreszierenden Stoffs aus dieser gesättigten Lösung beim Trocknen,
c) Bestrahlen der Primerschicht (12) mit einer Lichtquelle,
d) Erkennen der von der Primerschicht (12) fehlerhaft abgedeckten Stellen der Oberfläche des mindestens einen Bauteils, und
e) gegebenenfalls Auftragen von Primerlösung auf als fehlerhaft abgedeckt erkannte Stellen der Oberfläche des mindestens einen Bauteils.

2. Verfahren nach Anspruch 1, **dadurch gekennzeichnet,**
- **dass** in der Primerlösung 0,5 Gewichtsprozent des im ultravioletten Licht fluoreszierenden Stoffs gelöst werden.

3. Verfahren nach einem der Ansprüche 1 oder 2, **dadurch gekennzeichnet,**
- **dass** für das Aufbringen des elektrisch isolierenden Materials ein Giess- oder ein Pressverfahren verwendet wird.

4. Isolator, erhältlich nach einem der voranstehenden Verfahren, mit mindestens einem mit einer Primerschicht (12) versehenen Bauteil und mit elektrisch isolierendem Material, welches auf die Primerschicht (12) aufgebracht ist, **dadurch gekennzeichnet,**
- **dass** die Primerschicht (12) einen beim Bestrahlen mit Licht fluoreszierenden Stoff enthält, wobei als fluoreszierender Stoff ein im ultravioletten Licht fluoreszierender Stoff vorgesehen ist.

5. Isolator nach Anspruch 4, **dadurch gekennzeichnet,**
- **dass** als Bauteil mindestens ein Tragrohr aus Isoliermaterial vorgesehen ist.

6. Isolator nach Anspruch 4, **dadurch gekennzeichnet,**
- **dass** als Bauteil mindestens ein Varistorelement mit entsprechenden Anschlussarmaturen vorgesehen ist.

## Claims

1. Method for the production of an insulator having at least one component coated with electrically insulating material, in which a primer solution is applied onto the at least one component, in which the applied primer solution is dried to form a primer coat (12), after which the electrically insulating material is applied onto the primer coat (12), **characterized in that** the following procedural steps are carried out before application of the electrically insulating material:
a) dissolving a material that fluoresces under ultraviolet light in the primer solution, the amount of the material that fluoresces under ultraviolet light which is dissolved in the primer solution being such that this primer solution is saturated with this material, and
b) during drying, precipitating the material that fluoresces under ultraviolet light from this saturated solution,
c) exposing the primer coat (12) using a light source,
d) detecting the points on the surface of the at least one component that are defectively covered with the primer coat (12), and
e) if appropriate, applying primer solution onto the points on the surface of the at least one component that are detected as being defectively covered.

2. Method according to Claim 1, **characterized**
- **in that** 0.5 per cent by weight of the material that fluoresces under ultraviolet light is dissolved in the primer solution.

3. Method according to one of Claims 1 or 2, **characterized**
- **in that** a moulding or a pressing method is used to apply the electrically insulating material.

4. Insulator, obtainable according to one of the preceding methods, having at least one component provided with a primer coat (12) and having electrically insulating material which is applied onto the primer coat (12), **characterized**
- **in that** the primer coat (12) contains a material that fluoresces when exposed to light, a material that fluoresces under ultraviolet light being provided as the fluorescent material.

5. Insulator according to Claim 4, **characterized**
- **in that** at least one supporting tube of insulating material is provided as the component.

6. Insulator according to Claim 4, **characterized**
- **in that** at least one varistor element having the corresponding connection end fittings is provided as the component.

## Revendications

1. Procédé pour la fabrication d'un isolateur présentant au moins un composant revêtu d'un matériau électriquement isolant, dans lequel une solution de couche de fond est appliquée sur le composant au moins prévu, dans lequel la solution de couche de fond appliquée est séchée pour former une couche de fond (12), suite à quoi le matériau électriquement isolant est appliqué sur la couche de fond (12), **caractérisé en ce qu'**avant l'application du matériau électriquement isolant, les étapes de procédé suivantes sont exécutées :
a) dissolution d'un matériau fluorescent en lumière ultraviolette dans la solution de couche de fond, le matériau fluorescent en lumière ultraviolette étant dissous dans la solution de couche de fond en une quantité telle que la solution est saturée en ce matériau,
b) précipitation du matériau fluorescent en lumière ultraviolette hors de cette solution saturée lors du séchage,
c) irradiation de la couche de fond (12) par une source de lumière,
d) détection des emplacements de la surface du composant au moins prévu incorrectement recouverts par la couche de fond (12), et
e) éventuellement, application d'une solution de couche de fond sur les emplacements de la surface du composant au moins prévu détectés comme incorrectement recouverts.

2. Procédé selon la revendication 1, **caractérisé en ce que** l'on dissout dans la solution de couche de fond 0,5 % en poids du matériau fluorescent en lumière ultraviolette.

3. Procédé selon l'une des revendications 1 ou 2, **caractérisé en ce que** pour l'application du matériau électriquement isolant, on utilise un procédé de coulée ou un procédé à pression.

4. Isolateur obtenu selon l'un des procédés précédents, comportant au moins un composant doté d'une couche de fond (12) et un matériau électriquement isolant appliqué sur la couche de fond (12), **caractérisé en ce que** la couche de fond (12) contient un matériau fluorescent lorsqu'il est irradié par de la lumière, et comme matériau fluorescent on prévoit un matériau fluorescent en lumière ultraviolette.

5. Isolateur selon la revendication 4, **caractérisé en ce que** comme composant est prévu au moins un tube porteur en matériau isolant.

6. Isolateur selon la revendication 4, **caractérisé en ce que** comme composant est prévu au moins un élément de varistor avec des bornes de raccordement appropriées.
